# EUROPÄISCHE PATENTSCHRIFT

(11) **EP 1 667 834 B1**
(45) Veröffentlichungstag und Bekanntmachung des Hinweises auf die Patenterteilung: **09.12.2009**
(21) Anmeldenummer: 04817085.6
(22) Anmeldetag: 04.10.2004
(51) Int. Cl.: B29C 45/14, B29C 45/00

(54) **LEUCHTELEMENT MIT EINLEGELICHTLEITKÖRPER**
LIGHTING ELEMENT COMPRISING AN INSERTED LIGHT-GUIDING BODY
ELEMENT LUMINEUX COMPORTANT UN CORPS CONDUCTEUR OPTIQUE INSERE

(30) Priorität: 03.10.2003 DE 10346452
(43) Veröffentlichungstag der Anmeldung: 14.06.2006
(73) Patentinhaber: Odelo GmbH, 71409 Schwaikheim (DE)
(72) Erfinder: MERTENS, Jens, 73734 Esslingen (DE)
(74) Vertreter: Kaufmann, Ursula Josefine
(86) Internationale Anmeldenummer: PCT/DE2004/002212
(87) Internationale Veröffentlichungsnummer: WO 2005/034250

(56) Entgegenhaltungen:
- WO-A-03/056637
- DE-C1- 10 163 117
- GB-A- 2 282 700
- US-B1- 6 527 411
- BRYCE, D. M.: "Plastic injection molding ... materieal selection and product design fundamentals" 1972, SOCIETY OF MANUFACTURING ENGINEERS , USA , XP002321451 Seite 256, Absatz 2 Seite 256 - Seite 258
- BEITZ: "Dubbel - Taschenbuch für den Maschinenbau, 17. Auflage" 1990, SPRINGER VERLAG , BERLIN , XP002321452 Seite 70, linke Spalte, Absatz 4 - rechte Spalte, letzter Absatz
- SCHREYER: "Konstruieren mit Kunststoffen, Teil 1" 1972, CARL HANSER VERLAG , MÜNCHEN , XP002321453 Seite 249, letzter Absatz Seite 251
- "PLASTIC PART DESIGN FOR ECONOMICAL INJECTION MOULDING WALL THICKNESS AND RADIUSING CORNERS" DESIGN ENGINEERING, MORGAN-GRAMPIAN LTD. LONDON, GB, Juni 1985 (1985-06), Seite 31,34,39, XP001050269 ISSN: 0308-8448

## Beschreibung

Verfahren zum Herstellen eines Leuchtelements mit mindestens einer Lumineszenzdiode und einem vor der Lumineszenzdiode in der Hauptlichtaustrittsrichtung angeordneten Einlegelichtleitkörper, wobei jeweils die Lumineszenzdiode mit dem Einlegelichtleitkörper durch einen Spritzgießvorgang mit einem transparenten Kunststoff verbunden werden.

Aus der DE 101 63 117 ist ein derartiges Verfahren zur Herstellung eines Leuchtelements bekannt. Hierbei wird ein erster, LED-Teilkörper mit einem zweiten, größeren Lichtleitkörper durch Spritzgießen dauerhaft verbunden. Allerdings wird hier als LED-Teilkörper ein Sonderbauteil benutzt. Auch ergeben sich bei dieser Lösung in der Spritzgussform Teilbereiche großer Materialanhäufungen, was u.a. eine längere Abkühlzeit erfordert und eine ungleichförmige Abkühlung bedingt.

Aus der GB 2 282 700 A ist ein Verfahren offenbart zum Herstellen eines Leuchtelements mit mindestens einer Lumineszenzdiode und einen vor der Lumineszenzdiode in der Hauptlichtaustrittsrichtung angeordneten Einlegelichtleitkörper, wobei jeweils die Lumineszenzdiode und der Einlegelichtleitkörper beim Spritzgießen mit einem transparenten Kunststoff verbunden werden.

Auch aus der der WO03/056637 A2 ist ein Verfahren zum Herstellen eines Leuchtelements durch Spritzgießen bekannt. Beim Herstellen der Umspritzung von Einlegelichtleitkörper und Lumineszenzdiode verschmilzt der eingebrachte Kunststoff die in der Lumineszenzdioden-Endform liegenden Körper. Dabei benetzt die Umspritzung mindestens 50% der Oberfläche der Lumineszenzdiode.

Der vorliegenden Erfindung liegt daher die Problemstellung zugrunde, ein Verfahren zum Herstellen von lichtleitenden Leuchtelementen unter der Verwendung mindestens eines Einlegelichtleitkörpers zu entwickeln, bei dem bei üblichen Leistungen der bekannten Spritzvorgänge die transparenten Leuchtenteilkörper sicher, schnell und formgenau miteinander verbunden werden.

Diese Problemstellung wird mit den Merkmalen des Hauptanspruchs gelöst. Dazu benetzt die Umspritzung beim Spritzgießen die Leuchtdioden auf mindestens 50% ihre Oberfläche. Zugleich übersteigt die maximale Wandstärke der Umspritzung nicht das Dreifache der minimalen Wandstärke derselben.

In Fahrzeugleuchten sind durch das Verbinden verschiedener optischer Elemente mehrere Grenzflächen vorhanden, die den Wirkungsgrad bezüglich der Lichtausbeute und Strahlungsintensität niedrig halten. Zeine Verbesserung des Wirkungsgrades wird erzielt, wenn ein geschlossener optischer Körper mit nur einer Hauptlichtaustrittsöffnung hergestellt wird. Durch das Verwenden von Leuchtdioden lassen sich derartige Körper schaffen. Allerdings sind bei den derzeitigen technologischen Mitteln auf dem Gebiet der Spritzgießtechnik derartige Leuchten in der erforderlichen Größe ökonomisch noch nicht herstellbar.

Das hier beschriebene Verfahren ermöglicht das wirtschaftliche Herstellen großvolumiger Leuchten. Dazu werden Einlegekörper mit Leuchtdioden in mindestens einem Spritzgießverfahrensschritt gemeinsam umspritzt. U.a. bestimmen die Anordnung und jeweilige Gestalt der entsprechenden Vorstufenteile in der Spritzgießform die Qualität und die Wirtschaftlichkeit des Verfahrens.

Das Verfahren ist auch auf Lumineszenzdioden mit mehreren Chips und Elektroden anwendbar.

Weitere Einzelheiten der Erfindung ergeben sich aus den Unteransprüchen und der nachfolgenden Beschreibung von mehreren schematisch dargestellten Ausführungsbeispielen.
Figur 1: Bremsleuchte im Querschnitt;
Figur 2: Teillängsschnitt zu Figur 1.

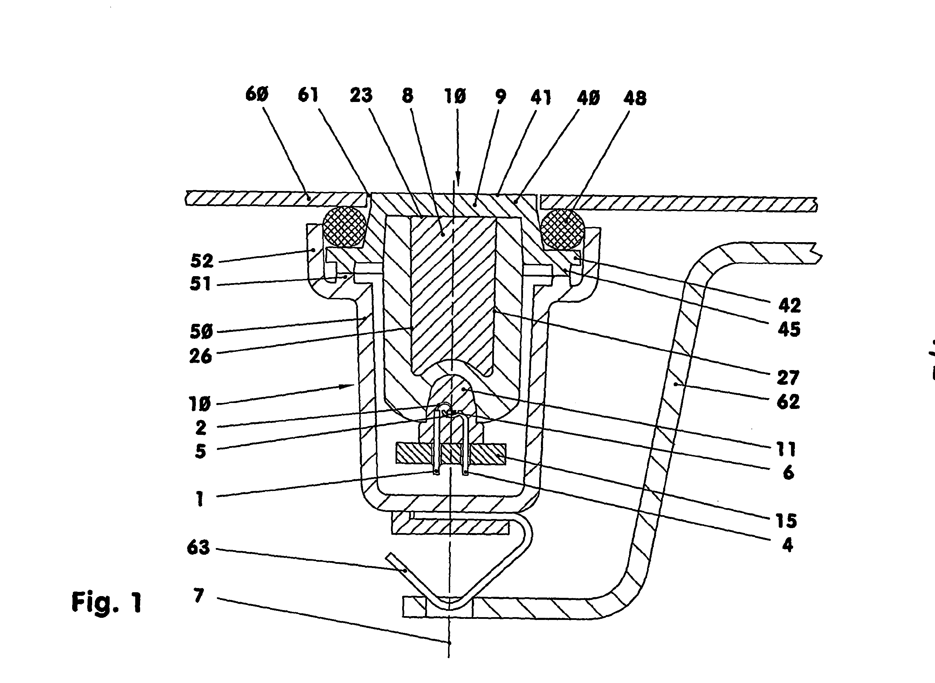

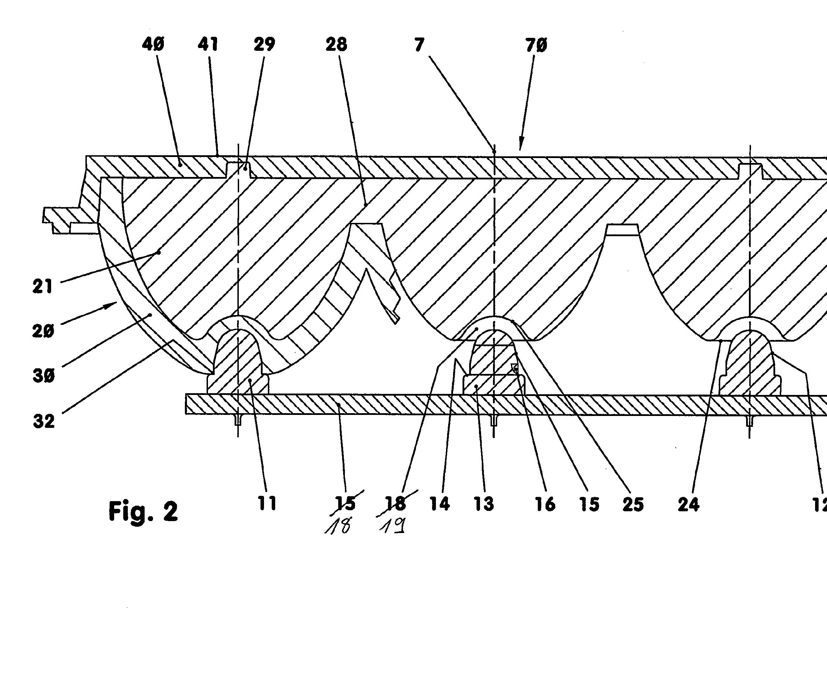

Die Figuren 1 und 2 zeigen als Leuchtelement (70) eine z.B. hochgesetzte PKW-Bremsleuchte. Das Leuchtelement (70), das hier beispielsweise mit Hilfe eines Gehäuses (50) im Kofferraumdeckel (60) des Kraftfahrzeugs angeordnet ist, besteht aus einer Gruppe von Einzelleuchtelementen (10), wobei jedes Element (10) mindestens eine LED (11) umfasst. Das Leuchtelement (70) hat eine Streuscheibe (40), deren äußere Oberfläche an die Form der umgebenden Oberflächenkrümmung des Kofferraumdeckels (60) angepasst ist.

Die einzelne LED (11) kann hierbei eine Standard-LED oder eine Vorstufen-LED sein. Letztere wird z.B. nur für den Einbau in der Bremsleuchte (70) hergestellt. Der LED (11) weist in der Regel die in einer Ebene liegenden elektrischen Anschlüsse (1, 4), den lichtemittierenden Chip (6), einen Bonddraht (2) und eine Reflektorwanne (5) auf. Letztere ist z.B. Teil der Kathode (4). In der Reflektorwanne (5) sitzt der Chip (6). Der Chip (6) kontaktiert über den Bonddraht (2) die Anode (1). Der Bonddraht (2) liegt dabei vorzugsweise in der Ebene, die von den Mittellinien der Elektroden (1, 4) aufgespannt wird. Die oberhalb des Chips liegende Zone transportiert das vom Chip (6) emittierte Licht möglichst verlustfrei zur Außenfläche (12) der LED (11).

Die in Figur 1 verwendete Standard-LED hat beispielsweise eine geometrische Form, die im Wesentlichen aus drei übereinander angeordneten Geometriekörpern besteht. Der erste Geometriekörper ist ein kurzer, zumindest annähernd gerader Zylinder (13), der ggf. zwei ebene Abflachungen aufweist, die z.B. parallel zur LED-Mittellinie (7) ausgerichtet sind. Der zweite Geometriekörper ist ein auf der oberen Stirnfläche (14) des Zylinders (13) angeordneter Kegelstumpf (15) oder vergleichbarer Rotationskörper, der sich vom Zylinder (13) weg verjüngt. Der dritte Geometriekörper ist eine Kalotte bzw. eine vergleichbare rotationssymmetrische Kappe, die auf der oberen, kleineren Stirnfläche des Kegelstumpfes positioniert ist. Die Mantellinie des Kegelstumpfes geht dabei tangential in die Kontur der Kappe über. Die obere Stirnfläche (14) des Zylinders (13) ist größer als die untere Stirnfläche des Kegelstumpfes (15). Die Mittellinien des Zylinders (13) und des Kegelstumpfes (15) liegen auf der LED-Mittellinie (7).

Ggf. befindet sich im unteren Bereiche des Kegelstumpfes (15) eine Kerbe (16), ein Kanal oder eine Taille, vgl. Figur 2 die gestrichelte Linie, die an der Stirnfläche (14) endet.

Wird das Einzelleuchtelement (10) in einer Gruppe von mehreren verwendet, werden die LED's (11) z.B. auf einer streifenförmigen Platine (18) angeordnet. Dazu werden sie beispielsweise nach einem vorherigen Aufkleben auf der Platine (18) festgelötet. Die Platine (18) verbindet die einzelnen LED's (11) über aufgebrachte Leiterbahnen. Ggf. sind auf der Platine (18) auch andere elektronische Bauteile wie z.B. Vorwiderstände, Sperrdioden oder integrierte Schaltkreise angeordnet. Die Platine (18) positioniert die LED's (11) zueinander und später - während des Umspritzens - in der Spritzgießvorrichtung. Ggf. sind die Elektroden (1, 4) der LED's (11) auch diskret durch einzelne Kabel elektrisch verbunden.

Der gegenüber der jeweiligen LED (11) gelegene Einlegelichtleitkörper (21) hat z.B. die Form eines beidseitig abgeflachten sowie oben und unten abgestumpften Teilparaboloids. Die abgeflachten Seitenflächen (26, 27) liegen annähernd parallel zu einer Mittelebene, die nach Figur 1 auf der Mittellinie (7) des jeweiligen Einzelleuchtelements (10) liegt. Der minimale Abstand der Seitenflächen (26, 27) von der Mittelebene beträgt z.B. 50% des maximalen LED-Durchmessers oder der maximalen LED-Breite. Im Ausführungsbeispiel wird der Abstand zwischen den Seitenflächen (26, 27) zur Hauptlichtaustrittsfläche (41) hin größer.

In der Stirnfläche (24) der nach Figur 2 unteren Abstumpfung befindet sich eine sphärische konkave Ausnehmung (25). Die Ausnehmung (25) ist hierbei so gekrümmt, dass der zwischen der Ausnehmung (25) und der LED (11) liegende Spalt (19) eine zumindest nahezu konstante Spaltdicke hat.

Die andere, hier oben liegende Stirnseite (23) ist plan und normal zur Mittellinie (7) des Einzelleuchtelements (10) orientiert. Ggf. ist im mittleren Bereich, z.B. zentral ein kurzer Zapfen (29), vgl. Figur 2, angeformt, der die Handhabung und Positionierung beim Umspritzen erleichtert. Die Länge des Zapfens (29) - gemessen in Längsausdehnung entlang der Mittellinie (7) - ist kürzer als die Dicke der Streuscheibe (40) in Zapfennähe. Als Streuscheibenwerkstoff ist ein transparenter, z.B. farbloser Kunststoff vorgesehen.

Werden mehrere Einzelleuchtelemente (10) in einer Gruppe (70) zusammengefasst und liegen diese (10) nebeneinander, werden sie jeweils über mindestens einen Steg (28) miteinander verbunden. Die Stege (28) haben hierbei z.B. einen halbkreisförmigen Querschnitt. Die Stege (28) grenzen bündig an die Stirnflächen (23) an, wobei sie mit diesen eine ebene oder gekrümmte Fläche bilden.

Zum Umspritzen wird die Platine (18) mit den LED's (11) und die Gruppe aus Einlegelichtleitkörpern (21) in eine Spritzgussform eingelegt. Hierbei liegt die einzelne LED (11) vom Einlegelichtleitkörper (21) an der engsten Stelle zwischen 0,3 und 3 Millimeter entfernt. Die Spritzgussform ist so gestaltet, dass die fertige Umspritzung pro LED-Einlegelichtleitkörper-Paar wiederum einen beidseitig abgeflachten und zumindest oben abgestumpften Teilparaboloid (30) bildet. Die Unterkante dieses Teilparaboloids liegt an der LED (11) unterhalb einer Ebene an, die zum einen durch den Schwerpunkt des LED-Chips (6) geht und zum anderen normal zur Mittellinie (7) ausgerichtet ist. Im Ausführungsbeispiel liegt der untere Rand (32) der Umspritzung (30) an der Stirnfläche (14) des Zylinders (13) der LED (11) an. Beispielsweise liegt der Rand (32) direkt in der geometrischen Schnittkante, die durch die Durchdringung des Zylinders (13) und des Rotationskörpers bzw. Kegelstumpfes (15) gebildet wird.

Die Oberfläche des Teilparaboloids (30) ist von der Oberfläche des Teilparaboloids des Einlegelichtleitkörpers (21) um einen Abstand entfernt, der z.B. der zweifachen Breite des Spalts (19) entspricht. Über weite Bereiche hat die Umspritzung (30) eine nahezu konstante Wandstärke. In Zonen stärkerer Krümmung kann sich die Wandstärke bis auf das dreifache der Spaltbreite erhöhen. Diese geringen Wandstärkendifferenzen ermöglichen ein problemloses Herstellen des Einzelleuchtelements (10).

Die Umspritzung (30) hintergreift bei LED's mit einer Kerbe (16) die entsprechende LED formschlüssig. Auch die Einlegelichtleitkörper (21) können Kerben, Kanäle oder Ringnuten gleicher Funktion aufweisen. Für das Umspritzen wird z.B. ein farbloser, transparenter Kunststoff eingesetzt.

In Figur 2 ist nur bei dem ersten Einlegelichtleitkörper (21) die Umspritzung (30) dargestellt.

In einem weiteren Schritt wird im Ausführungsbeispiel auf den Stirnflächen (23) der Einlegelichtleitkörper (21) die Streuscheibe (40) aufgespritzt. Die Streuscheibe (40) umgreift hierbei die Umspritzung (30) z.B. im oberen Fünftel. Die Streuscheibe (40) deckt dementsprechend den Einlegelichtleitkörper (21) an der Stirnfläche (23) und die Umspritzung (30) am oberen Rand vollständig ab. Sie hat gegenüber ihrer Hauptlichtaustrittsfläche (41) einen parallel versetzten, die gesamte Bremsleuchte (70) umschließenden flanschförmigen Montagerand (42). Die Hauptlichtaustrittsfläche (41) ist glattflächig oder strukturiert gestaltet. Als Werkstoff wird beispielsweise ein roter, transparenter Thermoplast verwendet.

Die lichtleitenden und stromführenden Bauteile (11, 21, 30, 18) der mittleren, hochgesetzten Bremsleuchte (70) werden von dem rückseitigen Gehäuse (50) umgeben, vgl. Figur 1. Das z.B. aus einem Metall gefertigte Gehäuse (50) ist eine mit einem Deckel verschließbare Wanne. Der Deckel ist hierbei die z.B. dicht auf der Wanne sitzende Streuscheibe (40). Hierzu sind an der Streuscheibe (40) und am Gehäuse (50) jeweils einander flächig kontaktierende Dichtkonturen (45, 51) ausgebildet. Zum Schutz dieser Dichtkonturen (45, 51) und zum Halten eines Dichtringes (48) ist das Gehäuse (50) teilweise um die Streuscheibe (40) als stützender Rand herumgeführt, vgl. Figur 1.

Im Kofferraumdeckel (60), in der Heckklappe oder am hinteren Dachrand ist die Bremsleuchte (70) so eingebaut, dass die Oberfläche der Streuscheibe (40) tangential an die Oberfläche des die Bremsleuchte (70) tragenden Karosserieblechs angrenzt. Hierbei kann das Karosserieblech (60) auch aus einem nichtmetallischen Werkstoff hergestellt sein. Die Streuscheibe (40) wird zusammen mit dem Gehäuse (50) von der Rückseite her in eine Aussparung (61) eingesetzt und dort mittels einer hier z.B. zweifach gebogenen Blattfeder (63) gegen einen gegenüber dem Karosserieblech (60) ortsfesten Haltebügel (62) gespannt. Im eingebauten Zustand wird die Aussparung (61) durch die Streuscheibe (40) und den auf dem flanschartigen Rand (42) der Streuscheibe (40) aufliegenden Dichtring (48) gegen ein Eindringen von Wasser und Schmutz verschlossen.

Um das typische Erscheinungsbild einer mittleren Bremsleuchte zu erzeugen, können die Farben der einzelnen Bauteile (11, 21, 30, 40) in verschiedenen Variationen verwendet werden.

Den Werkstoffen der einzelnen transparenten Bestandteile der Bremsleuchte (70) können bestimmte, die Wellenlänge des vom Chip (6) ausgesandten Lichts verändernde, Substanzen beigemengt werden, so dass die subjektiv erkennbare Lichtfarbe der einer typischen Bremsleuchte (70) entspricht, obwohl der unbeleuchtete Bremsleuchtenwerkstoff eine andere Farbe hat, z.B. die Farbe des umgebenden Karosseriebereiches.

Ein Einzelleuchtelement (10) kann selbstverständlich auch separat verwendet werden.

### Bezugszeichenliste:

- 1: Anschluss, Anode, Elektrode
- 2: Bonddraht, Aludraht
- 4: Anschluss, Kathode, Elektrode
- 5: Reflektorwanne
- 6: Chip
- 7: Mittellinie
- 8: Werkstoff, weiß, transparent
- 9: Werkstoff, rot, transparent

- 10: Einzelleuchtelement
- 11: LED, Lumineszenzdiode, Diode
- 12: LED-Oberfläche
- 13: Zylinder
- 14: Stirnfläche
- 15: Kegelstumpf
- 16: Kerbe, Kanal, Taille, Ringnut
- 18: Platine
- 19: Spalt

- 20: Gruppe von Einlegelichtleitkörpern
- 21: Einlegelichtleitkörper

- 23: Stirnfläche, oben; Abstumpfung
- 24: Stirnfläche, unten; Abstumpfung
- 25: Ausnehmung, konkav
- 26: Seitenfläche, Abflachung
- 27: Seitenfläche, Abflachung
- 28: Steg
- 29: Zapfen

- 30: Umspritzung, Teilparaboloid, abgestumpft
- 32: Kante, unten

- 40: Lichtscheibe, Streuscheibe
- 41: Hauptlichtaustrittsfläche
- 42: Montagerand, flanschförmig
- 45: Dichtkontur

- 48: Dichtring

- 50: Gehäuse, Wanne
- 51: Dichtkontur
- 52: Stützrand

- 60: Karosserieblech, Kofferraumdeckel
- 61: Aussparung
- 62: Haltebügel
- 63: Blattfeder

- 70: Leuchtelement, Bremsleuchte

## Patentansprüche

1. Verfahren zum Herstellen eines Leuchtelements (70) mit mindestens einer Lumineszenzdiode (11) und einem vor der Lumineszenzdiode (11) in der Hauptlichtaustrittsrichtung angeordneten Einlegelichtleitkörper (21), wobei jeweils die Lumineszenzdiode (11) mit dem Einlegelichtleitkörper (21) durch einen Spritzgießvorgang mit einem transparenten Kunststoff verbunden werden, wobei die Umspritzung (30) beim Spritzgießen mindestens 50% der Lumineszenzdiodenoberfläche (12) benetzt, **dadurch gekennzeichnet,**
- **dass** die maximale Wandstärke der Umspritzung (30) höchstens bis auf das Dreifache einer Breite eines Spalts (19) zwischen einer zur Lumineszenzdiode (11) konkav ausgebildeten Ausnehmung (25) des Einlegelichtleitkörpers (21) und der Lumineszenzdiode (11) ansteigt; und
- **dass** in einem weiteren Spritzgießschritt an die Kombination aus Lumineszenzdiode (11), Einlegelichtleitkörper (21) und Umspritzung (30) eine Lichtscheibe (40) zur Ausbildung einer Hauptlichtaustrittsfläche (41) aufgespritzt wird, welche die Umspritzung (30) umgreift.

2. Verfahren nach Anspruch 1, **dadurch gekennzeichnet, dass** mehrere nebeneinander angeordnete Lumineszenzdioden (11) vor dem Umspritzen auf einer Platine (18) befestigt werden.

3. Leuchtelement (70) mit mindestens einer Lumineszenzdiode (11) und einem vor der Lumineszenzdiode (11) in der Hauptlichtaustrittsrichtung (41) angeordneten Einlegelichtleitkörper (21), wobei jeweils die Lumineszenzdiode (11) mit dem Einlegelichtleitkörper (21) durch einen Spritzgießvorgang nach einem der vorhergehenden Ansprüche mit einem transparenten Kunststoff verbunden werden, wobei die Umspritzung (30) beim Spritzgießen mindestens 50% der Lumineszenzdiodenoberfläche (12) benetzt, **dadurch gekennzeichnet,**
- **dass** die maximale Wandstärke der Umspritzung (30) höchstens bis auf das Dreifache einer Breite eines Spalts (19) zwischen einer zur Lumineszenzdiode (11) konkav ausgebildeten Ausnehmung (25) des Einlegelichtleitkörpers (21) und der Lumineszenzdiode (11) ansteigt;
- **dass** eine Lichtscheibe (40) an die Kombination aus Lumineszenzdiode (11), Einlegelichtleitkörper (21) und Umspritzung (30) zur Ausbildung einer Hauptlichtaustrittsfläche (41) aufgespritzt ist, welche die Umspritzung (30) umgreift.

4. Leuchtelement nach Anspruch 3, **dadurch gekennzeichnet, dass** der untere Rand (32) der die Leuchtdiodenoberfläche (12) radial umgreifenden Umspritzung (30) unterhalb einer Ebene endet, die normal zur Mittellinie (7) der Lumineszenzdiode (11) und durch den Schwerpunkt des lichtemittierenden Chips (6) dieser Lumineszenzdiode (11) verläuft.

5. Leuchtelement nach Anspruch 3, **dadurch gekennzeichnet, dass** die Lumineszenzdiode (11) und der Einlegelichtleitkörper (21) auf einer gemeinsamen Mittellinie (7) liegen, wobei die Mittellinie (7) durch den Schwerpunkt des lichtemittierenden Chips (6) der Lumineszenzdiode (11) verläuft.

6. Leuchtelement nach Anspruch 3, **gekennzeichnet durch** mehrere nebeneinander angeordnete Einzelleuchtelemente (10).

7. Leuchtelement nach Anspruch 6, **dadurch gekennzeichnet, dass** die Mittellinien (7) der Einzelleuchtelemente (10) parallel zueinander angeordnet werden oder sich zumindest teilweise fächerartig in einem oder mehreren hinter dem Leuchtelement (70) liegenden Punkten schneiden oder in einem kurzen Abstand kreuzen.

8. Leuchtelement nach Anspruch 3, **dadurch gekennzeichnet, dass** der Einlegelichtleitkörper (21) zur Diode (11) hin eine konkave Ausnehmung (25) aufweist.

9. Leuchtelement nach Anspruch 3, **dadurch gekennzeichnet, dass** die Lichtscheibe (40) gegenüber ihrer Hauptlichtaustrittsfläche (41) einen parallel versetzten, das ganze Leuchtelement (70) umschließenden flanschförmigen Rand (42) aufweist.

10. Leuchtelement nach Anspruch 3, **dadurch gekennzeichnet, dass** die Lichtscheibe (40) eine Streuscheibe ist.

11. Leuchtelement nach Anspruch 3 und 10, **dadurch gekennzeichnet, dass** der Einlegelichtleitkörper (21) eine andere Farbe als die Streuscheibe (40) hat.

12. Leuchtelement nach Anspruch 3, **dadurch gekennzeichnet, dass** dem Werkstoff mindestens eines Bauteils (11, 21, 30,40) mindestens eine Substanz beigemengt ist, die bei Anregung durch das vom Chip (6) emittierte Licht ein Licht anderer Wellenlänge abstrahlt.

## Claims

1. Method for making a lighting element (70) with at least one light-emitting diode (11) and one inserted light guide body (21) arranged in front of the light-emitting diode (11) in the main light emission direction, where in each case the light-emitting diode (11) is connected to the inserted light guide body (21) by an injection molding operation with a transparent plastic, where the molded enclosure (30) wets at least 50% of the light-emitting diode surface (12) during injection molding,
**characterized in that**
- the maximum wall thickness of the molded enclosure (30) rises at most to three times the width of a gap (19) between the light-emitting diode (11) and a recess (25) of the inserted light guide body (21) designed concave relative to the light-emitting diode (11),
- in a further injection molding step a light disc (40) is sprayed onto the combination of light-emitting diode (11), inserted light guide body (21) and molded enclosure (30) to form a main light emission surface (41) gripping over the molded enclosure (30).

2. Method according to Claim 1, **characterized in that** several light-emitting diodes (11) arranged adjacently are fastened on a board (18) before the enclosure is molded.

3. Lighting element (70) with at least one light-emitting diode (11) and one inserted light guide body (21) arranged in front of the light-emitting diode (11) in the main light emission direction (41), where in each case the light-emitting diode (11) is connected to the inserted light guide body (21) by an injection molding operation according to one of the preceding Claims with a transparent plastic, where the molded enclosure (30) wets at least 50% of the light-emitting diode surface (12) during injection molding, **characterized in that**
- the maximum wall thickness of the molded enclosure (30) rises at most to three times the width of a gap (19) between the light-emitting diode (11) and a recess (25) of the inserted light guide body (21) designed concave relative to the light-emitting diode (11);
- a light disc (40) is sprayed onto the combination of light-emitting diode (11), inserted light guide body (21) and molded enclosure (30) to form a main light emission surface (41) gripping over the molded enclosure (30).

4. Lighting element according to Claim 3, **characterized in that** the lower edge (32) of the molded enclosure (30) gripping radially over the light-emitting diode surface (12) ends underneath a plane running perpendicular to the center line (7) of the light-emitting diode (11) and through the focal point of the light-emitting chip (6) of this light-emitting diode (11).

5. Lighting element according to Claim 3, **characterized in that** the light-emitting diode (11) and the inserted light guide body (21) are on a common center line (7), where the center line (7) passes through the focal point of the light-emitting chip (6) of the light-emitting diode (11).

6. Lighting element according to Claim 3, **characterized by** several individual lighting elements (10) arranged adjacently to one another.

7. Lighting element according to Claim 6, **characterized in that** the center lines (7) of the individual lighting elements (1D) are arranged parallel to one another or converge at least partially in a fan-like arrangement at one or more points located behind the lighting element (70) or intersect at a short distance.

8. Lighting element according to Claim 3, **characterized in that** the inserted light guide body (21) has a concave recess (25) facing the diode (11).

9. Lighting element according to Claim 3, **characterized in that** the light disc (40) has opposite its main light emission surface (41) a parallel-offset and flange-like rim (42) enclosing the entire lighting element (70).

10. Lighting element according to Claim 3, **characterized in that** the light disc (40) is a diffusion disc.

11. Lighting element according to Claims 3 and 10, **characterized in that** the inserted light guide body (21) has a different colour to the diffusion disc (40).

12. Lighting element according to Claim 3, **characterized in that** to the material of at least one component (11, 21, 30, 40) at least one substance is admixed that when excited by the light emitted by the chip (6) radiates a light of a different wavelength.

## Revendications

1. Procédé pour fabriquer un bloc optique (70) avec au moins une diode électroluminescente (11) et un conducteur optique d'insertion (21) placé devant la diode électroluminescente (11) dans la direction principale de sortie de la lumière, sachant que chaque diode électroluminescente (11) est reliée au conducteur optique d'insertion (21) par une matière synthétique transparente appliquée par moulage par injection, l'enrobage (30) humectant au moins 50 % de la surface de la diode électroluminescente (12) lors du moulage par injection,
**caractérisé en ce**
- **que** l'épaisseur maximale de paroi de l'enrobage (30) augmente au plus jusqu'au triple d'une largeur d'un interstice (19) entre un évidement (25) du conducteur optique d'insertion (21) concave par rapport à la diode électroluminescente (11) et la diode électroluminescente (11) ; et
- **que** dans une étape suivante du moulage par injection, est injecté un cabochon (40) sur la combinaison constituée de la diode électroluminescente (11), du conducteur optique d'insertion (21) et de l'enrobage (30) afin de former une surface principale de sortie de la lumière (41) qui entoure l'enrobage (30).

2. Procédé selon la revendication 1, **caractérisé en ce que** plusieurs diodes électroluminescentes (11) placées côte à côte sont fixées sur une platine (18) avant l'injection.

3. Bloc optique (70) avec au moins une diode électroluminescente (11) et un conducteur optique d'insertion (21) placé devant la diode électroluminescente (11) dans la direction principale de sortie de la lumière (41), sachant que les diodes électroluminescentes (11) sont respectivement reliées au conducteur optique d'insertion (21) par une matière synthétique transparente appliquée par un moulage par injection selon l'une des revendications précédentes, l'enrobage (30) humectant au moins 50 % de la surface de la diode électroluminescente (12) lors du moulage par injection, **caractérisé en ce**
- **que** l'épaisseur maximale de paroi de l'enrobage (30) augmente au plus jusqu'au triple d'une largeur d'un interstice (19) entre un évidement (25) du conducteur optique d'insertion (21) concave par rapport à la diode électroluminescente (11) et la diode électroluminescente (11) ;
- **qu'**est injecté un cabochon (40) sur la combinaison constituée de la diode électroluminescente (11), du conducteur optique d'insertion (21) et de l'enrobage (30) afin de former une surface principale de sortie de la lumière (41) qui entoure l'enrobage (30).

4. Bloc optique selon la revendication 3, **caractérisé en ce que** le bord inférieur (32) de l'enrobage (30) entourant radialement la surface de la diode électroluminescente (12) se termine sous un plan qui est perpendiculaire à la ligne médiane (7) de la diode électroluminescente (11) et passe par le centre de gravité de la puce électroluminescente (6) de cette diode électroluminescente (11).

5. Bloc optique selon la revendication 3, **caractérisé en ce que** la diode électroluminescente (11) et le conducteur optique d'insertion (21) sont situés sur une ligne médiane commune (7), la ligne médiane (7) passant par le centre de gravité de la puce électroluminescente (6) de la diode électroluminescente (11).

6. Bloc optique selon la revendication 3, **caractérisé par** plusieurs blocs optiques individuels (10) placés côte à côte.

7. Bloc optique selon la revendication 6, **caractérisé en ce que** les lignes médianes (7) des blocs optiques individuels (10) sont parallèles ou sont disposées au moins partiellement en éventail pour se couper en un ou plusieurs point(s) derrière le bloc optique (70), ou pour se croiser à une faible distance.

8. Bloc optique selon la revendication 3, **caractérisé en ce que** le conducteur optique d'insertion (21) présente un évidement concave (25) en direction de la diode (11).

9. Bloc optique selon la revendication 3, **caractérisé en ce que** le cabochon (40) présente vis-à-vis de sa surface principale de sortie de la lumière (41) un bord en forme de bride (42) parallèlement décalé et entourant la totalité du bloc optique (70).

10. Bloc optique selon la revendication 3, **caractérisé en ce que** le cabochon (40) est un diffuseur.

11. Bloc optique selon les revendications 3 et 10, **caractérisé en ce que** le conducteur optique d'insertion (21) a une autre couleur que le diffuseur (40).

12. Bloc optique selon la revendication 3, **caractérisé en ce qu'**au matériau d'au moins un composant (11, 21, 30, 40) est ajoutée au moins une substance qui diffuse une lumière d'une autre longueur d'onde lorsqu'elle est excitée par la lumière émise par la puce (6).
